# EUROPÄISCHE PATENTSCHRIFT

(11) **EP 1 059 197 B1**
(45) Veröffentlichungstag und Bekanntmachung des Hinweises auf die Patenterteilung: **27.08.2003**
(21) Anmeldenummer: 00111846.2
(22) Anmeldetag: 07.06.2000
(51) Int. Cl.: B60N 2/68

(54) **Holmelement zur Kraftabstützung in einem Fahrzeug**
Beam for force supporting in a vehicle
Barre supportant des efforts dans un véhicule

(30) Priorität: 09.06.1999 DE 29910063 U
(43) Veröffentlichungstag der Anmeldung: 13.12.2000
(73) Patentinhaber: Johnson Controls GmbH, 51399 Burscheid (DE)
(72) Erfinder: Schmale, Gerhard, 42499 Hückeswagen (DE); Lietz, Wolfgang, 58339 Breckerfeld (DE)
(74) Vertreter: Kutzenberger, Helga, Dr.

(56) Entgegenhaltungen:
- EP-A- 0 709 250
- DE-A- 19 603 946
- DE-U- 29 622 299
- US-A- 4 804 226
- US-A- 5 645 316
- US-A- 5 722 731

## Beschreibung

Die vorliegende Erfindung betrifft ein Holmelement zur Abstützung einer Kraft in einem Fahrzeug, insbesondere zur Abstützung eines oberen, im Bereich einer Rückenlehne integrierten Gurtpunktes bei einem Gurtintegralsitz, bestehend aus einem Profilelement mit einem starr zu befestigenden ersten Profilende und einem freien zweiten Profilende, wobei am zweiten Profilende ein Kraftangriff für die in Richtung einer zu einer Profil-Längsachse etwa senkrecht verlaufenden Kraftachse wirkende Kraft angeordnet ist.

Derartige Holmelemente sind bekannt. Vor allem für den bevorzugten Anwendungsfall zur Abstützung eines Sicherheitsgurtpunktes bei einem sogenannten Gurtintegralsitz, wobei ein oberer Gurt-Umlenkpunkt oder ein Gurtaufroller im oberen Bereich einer Sitz-Rückenlehne integriert ist, werden an das jeweilige Holmelement hohe Anforderungen bezüglich der Biegesteifigkeit gestellt. Um zu vermeiden, daß das Holmelement bei hohen Zugbelastungen zusammenbricht, werden in der Regel verstärkte Ausführungen, insbesondere in Form von geschlossenen Kastenprofilen, eingesetzt, was aber nachteiligerweise das Gewicht und die Kosten erhöht.

Weitere Holmelemente, die jedoch kein freies zweites Profilende im Sinne der o.g. Art aufweisen, sind z.B. aus der US-A-4 804 226 oder auch der DE-U-296 22 299 bekannt.

Der vorliegenden Erfindung liegt die Aufgabe zugrunde, ein Holmelement zu schaffen, welches sich durch geringes Gewicht und entsprechend günstige Kosten auszeichnet, aber trotzdem eine ausreichende Haltbarkeit und sichere Kraftabstützung gewährleistet.

Erfindungsgemäß wird dies dadurch erreicht, daß das Profilelement von einem offenen Hohlprofil gebildet ist, so daß - bezogen auf eine durch den Kraftangriff verlaufende Querschnittsebene - sein Schubmittelpunkt gegenüber seinem Schwerpunkt versetzt ist, wobei der Kraftangriff gegenüber dem Schubmittelpunkt derart versetzt angeordnet ist, daß bei Beaufschlagung mit einer Kraft bis zu einem bestimmten Kraftbetrag eine Torsion des Profilelementes soweit erfolgt, bis die Kraftachse durch den Schubmittelpunkt verläuft. Dadurch wird ab dem bestimmten Kraftbetrag bei weiter steigender Kraft das Profilelement nur noch auf Biegung beansprucht.

Durch diese erfindungsgemäßen Maßnahmen ist das Holmelement bei Kräften unterhalb des bestimmten Kraftbetrags relativ weich, d. h. es soll zu elastischen Torsionen kommen, wodurch eine weiche, elastische "Dämpfung" dieser relativ geringen Kräfte erreicht wird. Innerhalb dieses erfindungsgemäßen Torsionsbereichs ergibt sich am Kraftangriff ein torsionsbedingt verändernder Hebelarm, wodurch trotz steigender Kraft das Torsionsmoment gegen Null geht. Bei Erreichen des Torsionszustandes, in dem die Kraftachse durch den Schubmittelpunkt verläuft, wird das Holmelement schlagartig härter, weil eine weitergehende Torsion ausgeschlossen ist und das Profilelement nur noch auf Biegung beansprucht wird. Es liegt dann eine hohe Biegesteifigkeit vor. Im Vergleich zu bisher üblichen starren Profilen wird durch die "vorgeschaltete" Torsion eine gesteigerte Bruchkraft erreicht.

Die Erfindung führt somit zu einer gesteigerten Belastbarkeit bei besonders geringem Gewicht und geringen Herstellkosten. Zudem wirkt sich die Erfindung auch in einem besonderen Komfort aus. Die bei starken Verzögerungen des Fahrzeugs auf eine Person durch den Sicherheitsgurt wirkenden Belastungen werden gedämpft, indem durch die erfindungsgemäße weichelastische Torsionsfähigkeit Belastungsspitzen weggeschnitten werden. Dennoch steht für einen Crashfall eine hohe Reserve an Biegesteifigkeit zur Verfügung.

Weitere vorteilhafte Ausgestaltungsmerkmale der Erfindung sind in den Unteransprüchen und der folgenden Beschreibung enthalten.

Anhand der Zeichnung soll im folgenden die Erfindung beispielhaft genauere erläutert werden. Dabei zeigen:
- Fig. 1: eine schematische Vorderansicht einer möglichen Ausführungsform eines erfindungsgemäßen Holmelementes in einem unverformten Zustand ohne Kraftbeaufschlagung,
- Fig. 2: eine Draufsicht in Pfeilrichtung II gemäß Fig. 1,
- Fig. 3: eine Ansicht analog zu Fig. 2 im belastungsbedingt verformten Zustand,
- Fig. 4: eine Seitenansicht im verformten Zustand gemäß Pfeil IV in Fig. 3 bzw. Fig. 1 und
- Fig. 5: ein schematisches Kräftediagramm.

Ein erfindungsgemäßes Holmelement 1 besteht aus einem Profilelement 2 mit einem starr zu befestigenden ersten Profilende 2a und einem freien zweiten Profilende 2b. An dem freien zweiten Profilende 2b ist ein Kraftangriff 4 für eine Kraft F angeordnet, wobei diese Kraft F in Richtung einer Kraftachse K wirkt, die zur Profil-Längsachse 6 etwa senkrecht verläuft.

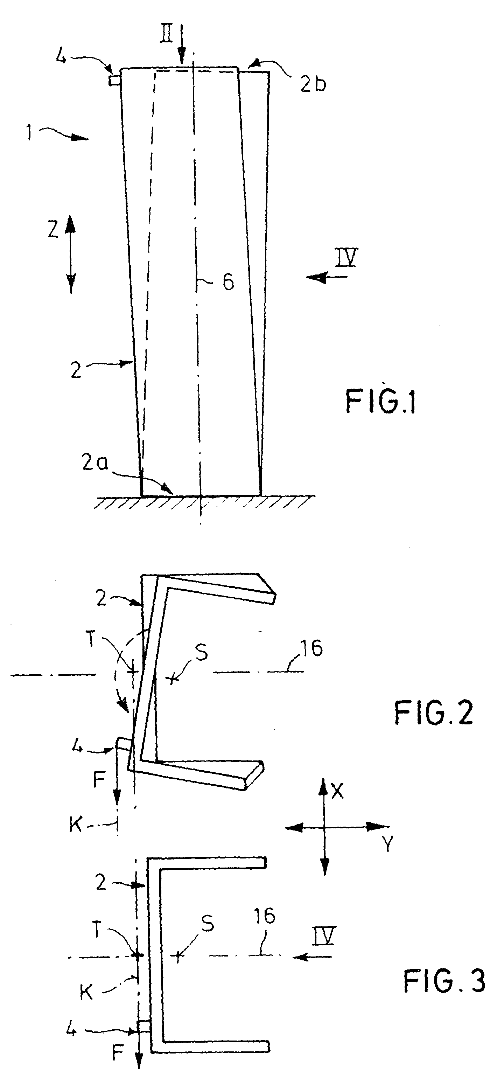

Erfindungsgemäß ist das Profilelement 2 als sogenanntes dünnwandiges offenes Profil ausgebildet, dessen Schubmittelpunkt T gegenüber seinem Schwerpunkt S versetzt außerhalb des Profils angeordnet ist (bezogen auf eine durch den Kraftangriffspunkt 4 verlaufende Querschnittsebene). Erfindungsgemäß ist hierbei der Kraftangriff 4 gegenüber dem Schubmittelpunkt T derart versetzt angeordnet, daß bei Beaufschlagung des Profilelementes 2 über den Kraftangriff 4 mit einer Kraft F bis zu einem bestimmten Kraftbetrag eine relativ weiche elastische Torsion des Profilelementes 2 erfolgt (siehe Fig. 2 und 3), bis die Kraftachse K durch den Schubmittelpunkt T verläuft (Fig. 3). Hierdurch wird ab diesem bestimmten Kraftbetrag bei weiter ansteigender Kraft das Profilelement nur noch auf Biegung beansprucht.

Wie sich weiterhin aus Fig. 2 und 3 ergibt, ist der Kraftangriff 4 erfindungsgemäß einerseits ausgehend vom Schwerpunkt S über den Schubmittelpunkt T hinaus sowie andererseits auch in die Richtung versetzt, in der die Kraft F wirkt. Hierdurch wird ein Hebelarm gebildet, der die erfindungsgemäße Torsion bewirkt, sich dabei aber torsionsbedingt stetig verkürzt, so daß sich bei Erreichen des in Fig. 3 dargestellten Zustandes das Torsionsmoment bis auf Null verringert.

Dabei ist es besonders vorteilhaft, wenn das Profilelement 2 - wie in Fig. 1 und 2 dargestellt - eine derart in sich plastisch entgegengesetzt vortordierte Form aufweist, daß durch die Kraftbeaufschlagung bei Erreichen des bestimmten Kraftbetrages, d. h. des in Fig. 3 dargestellten Zustandes, die Vortorsion im wesentlichen wieder aufgehoben ist und das Profilelement 2 eine quasi untordierte Form aufweist.

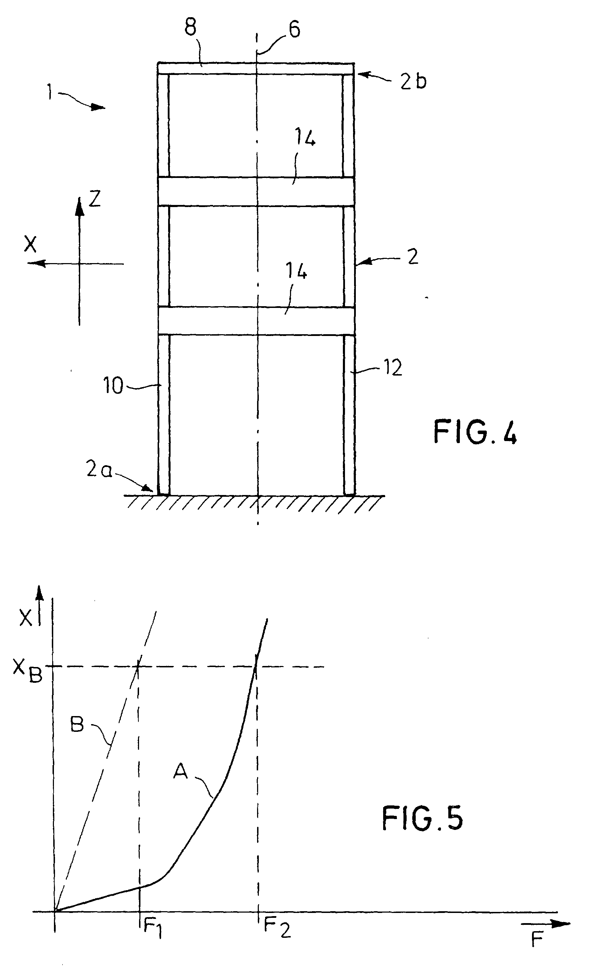

In der dargestellten Ausführungsform weist das Profilelement 2 über seine Längserstreckung eine im wesentlichen gleichbleibende Querschnittsform und -größe auf. In einer nicht dargestellten Ausführungsform kann jedoch auch vorgesehen sein, daß das Profilelement 2 ausgehend von dem ersten Profilende 2a eine sich in Längsrichtung bis zu dem zweiten Profilende 2b vorzugsweise stetig ändernde, insbesondere verkleinernde Querschnittsgröße aufweist. Es handelt sich um eine "quasi-konische" Form. Zusätzlich oder alternativ dazu kann gemäß Fig. 4 das Profilelement 2 an seinem freien zweiten Profilende 2b starr mit einem deckelartigen Abschlußelement 8 verbunden sein. Dabei handelt es sich um eine Platte, die das Profil in Längsrichtung verschließt. Durch beide beschriebenen Merkmale kann das Verformungsverhalten beeinflußt werden, insbesondere wird hierdurch die Torsion steifer. Als weitere Maßnahme dazu kann gemäß Fig. 4 vorgesehen sein, daß zwei auf der offenen Längsseite des Profilelementes 2 einander gegenüberliegende Profilschenkel 10, 12 an mindestens einer Stelle der Profil-Längserstreckung über eine Querverbindung 14 starr miteinander verbunden sind. Vorzugsweise können mehrere in Profil-Längsrichtung mit Abstand verteilt angeordnete Querverbindungen 14 vorgesehen sein.

Das Profilelement 2 kann einen beliebigen offenen Querschnitt aufweisen, beispielsweise wie dargestellt einen im wesentlichen U-förmigen Profilquerschnitt. Es kann sich auch um einen C-förmigen Querschnitt handeln.

Bezogen auf ein übliches Fahrzeug-Koordinatensystem (vgl. in den Fig. 1 bis 4 die Koordinaten X, Y und Z) wird das Profilelement 2 in einem Fahrzeug vorzugsweise derart ausgerichtet, daß eine durch die Profilöffnung verlaufende Profil-Querachse 16 (Fig. 3) etwa senkrecht zu der der Fahrzeug-Längsachse X entsprechenden Kraftachse K verläuft. Dabei entspricht die Profil-Querachse 16 etwa der Fahrzeug-Querachse Y. Weiterhin entspricht die Profil-Längsachse 6 bevorzugt etwa der Fahrzeug-Vertikalachse Z.

Was das Diagramm in Fig. 5 betrifft, so ist darin die Biegeverformung in Richtung X in Abhängigkeit von der Kraft F dargestellt. Eine Kurve A veranschaulicht den prinzipiellen Verlauf bei einem erfindungsgemäßen Holmelement 1. Die Kraftlinie verläuft zunächst ausgehend vom Nullpunkt relativ flach. Dies ist der Bereich, in dem hauptsächlich eine Torsion erfolgt. Bei Erreichen des Zustandes, wobei die Kraftachse K durch den Schubmittelpunkt T verläuft (Fig. 3), steigt die Kennlinie steil an. Im Vergleich dazu ist gestrichelt eine Kennlinie B eines starren Vollprofils oder geschlossenen Hohlprofils eingezeichnet, die schon ausgehend vom Nullpunkt sofort einen steilen linearen Verlauf aufweist. Ein solches bekanntes Profil bricht bei Bruch-Verformung X_{B}, die bei einer Kraft F₁ auftritt. Demgegenüber erreicht die Kennlinie A des erfindungsgemäßen Profilelementes diese kritische Verformung X_{B} erst bei einer Kraft F₂, die größer als F₁ ist.

## Patentansprüche

1. Holmelement (1) zur Abstützung einer Kraft (F) in einem Fahrzeug, insbesondere zur Abstützung eines oberen, im Bereich einer Rückenlehne integrierten Gurtpunktes bei einem Gurtintegralsitz, bestehend aus einem Profilelement (2) mit einem starr zu befestigenden ersten Profilende (2a) und einem freien zweiten Profilende (2b), wobei am zweiten Profilende (2b) ein Kraftangriff (4) für die in Richtung einer zur Profil-Längsachse (6) etwa senkrecht verlaufenden Kraftachse (K) wirkende Kraft (F) angeordnet ist,
**dadurch gekennzeichnet,**
**dass** das Profilelement (2) von einem dünnwandigen offenen Hohlprofil gebildet ist, so dass - bezogen auf eine durch den Kraftangriff (4) verlaufende Querschnittsebene - sein Schubmittelpunkt (T) gegenüber seinem Schwerpunkt (S) versetzt ist, wobei der Kraftangriff (4) gegenüber dem Schubmittelpunkt (T) derart versetzt angeordnet ist, dass bei Beaufschlagung mit einer Kraft (F) bis zu einem bestimmten Kraftbetrag eine Torsion des Profilelementes (2) um eine Längsachse soweit erfolgt, bis die Kraftachse (K) durch den Schubmittelpunkt (T) verläuft.

2. Holmelement nach Anspruch 1,
**dadurch gekennzeichnet,**
**daß** der Kraftangriff (4) einerseits ausgehend vom Schwerpunkt (S) über den Schubmittelpunkt (T) hinaus und andererseits in die Richtung versetzt ist, in der die Kraft (F) wirkt.

3. Holmelement nach Anspruch 1 oder 2,
**dadurch gekennzeichnet,**
**daß** das Profilelement (2) eine derart um eine Längsachse in sich derart vortordierte Form aufweist, daß durch die Kraftbeaufschlagung bei Erreichen des bestimmten Kraftbetrages, wobei die Kraftachse (K) durch den Schubmittelpunkt (T) verläuft, die Vortorsion im wesentlichen beseitigt ist.

4. Holmelement nach einem der Ansprüche 1 bis 3,
**dadurch gekennzeichnet,**
**daß** das Profilelement (2) ausgehend von dem ersten Profilende (2a) eine sich in Längsrichtung bis zu dem zweiten Profilende (2b) vorzugsweise stetig ändernde, insbesondere verkleinernde Querschnittsgröße aufweist.

5. Holmelement nach einem der Ansprüche 1 bis 4,
**dadurch gekennzeichnet,**
**daß** das Profilelement (2) an seinem freien zweiten Profilende (2b) in Längsrichtung gesehen starr mit einem deckelartigen Abschlußelement (8) verbunden ist.

6. Holmelement nach einem der Ansprüche 1 bis 5,
**dadurch gekennzeichnet,**
**daß** das Profilelement (2) auf seiner offenen Längsseite zwei gegenüberliegende Profilschenkel (10, 12) aufweist, die an mindestens einer Stelle der Profil-Längserstreckung über eine Querverbindung (14) starr miteinander verbunden sind.

7. Holmelement nach Anspruch 6,
**dadurch gekennzeichnet,**
**daß** die Profilschenkel (10, 12) über mehrere in Profil-Längsrichtung mit Abstand verteilt angeordnete Querverbindungen (14) verbunden sind.

8. Holmelement nach einem der Ansprüche 1 bis 7,
**dadurch gekennzeichnet,**
**daß** das Profilelement (2) einen im wesentlichen U-förmigen oder C-förmigen Profilquerschnitt aufweist.

9. Holmelement nach einem der Ansprüche 1 bis 8,
**dadurch gekennezcihnet,**
daß das Profilelement (2) in seinem in einem Fahrzeng montierten Zustand - bezogen auf ein übliches Fahrzeug-Koordinatensystem - derart ausgerichtet ist, daß eine durch die sich in Längsrichtung erstreckende Profilöffnung verlaufende Profil-Querachse (16) etwa senkrecht zu der der Fahrzeug-Längsachse (X) entsprechenden Kraftachse (K) verläuft.

10. Holmelement nach Anspruch 9,
**dadurch gekennzeichnet,**
**daß** die Profil-Querachse (16) etwa der Fahrzeug-Querachse (Y) entspricht und/oder daß die Profil-Längsachse (6) etwa der Fahrzeug-Vertikalachse (Z) entspricht.

## Claims

1. Spar element (1) for supporting a force (F) in a vehicle, in particular for supporting an upper belt point integrated in the region of a backrest, in the case of a belt-integral seat, consisting of a profile element (2) with a first profile end (2a) to be fastened rigidly and with a free second profile end (2b), there being arranged at the second profile end (2b) a force application point (4) for the force (F) acting in the direction of a force axis (K) running approximately perpendicularly to the profile longitudinal axis (6), **characterized in that** the profile element (2) is formed by a thin-walled open hollow profile, so that, with respect to a cross-sectional plane running through the force application point (4), the shear centre (T) of said profile element is offset in relation to its centre of gravity (S), the force application point (4) being arranged so as to be offset in relation to the shear centre (T), in such a way that, under a force (F) up to a specific amount of force, a torsion of the profile element (2) about a longitudinal axis takes place until the force axis (K) runs through the shear centre (T).

2. Spar element according to Claim 1, **characterized in that** the force application point (4) is offset, on the one hand, starting from the centre of gravity (S), beyond the shear centre (T) and, on the other hand, in the direction in which the force (F) acts.

3. Spar element according to Claim 1 or 2, **characterized in that** the profile element (2) has a shape pre-twisted on itself about a longitudinal axis, in such a way that, under the action of force, when the specific amount of force is reached, the force axis (K) running through the shear centre (T), the pre-torsion is essentially eliminated.

4. Spar element according to one of Claims 1 to 3, **characterized in that** the profile element (2) has, starting from the first profile end (2a), a cross-sectional size preferably constantly changing, in particular decreasing, in the longitudinal direction as far as the second profile end (2b).

5. Spar element according to one of Claims 1 to 4, **characterized in that**, as seen in the longitudinal direction, the profile element (2) is rigidly connected at its free second profile end (2b) to a lid-like closing element (8).

6. Spar element according to one of Claims 1 to 5, **characterized in that** the profile element (2) has, on its open longitudinal side, two mutually opposite profile legs (10, 12) which are rigidly connected to one another via a cross connection (14) at at least one location along the profile longitudinal extent.

7. Spar element according to Claim 6, **characterized in that** the profile legs (10, 12) are connected via a plurality of cross connections (14) arranged so as to be distributed at a distance from one another in the profile longitudinal direction.

8. Spar element according to one of Claims 1 to 7, **characterized in that** the profile element (2) has an essentially U-shaped or C-shaped profile cross section.

9. Spar element according to one of Claims 1 to 8, **characterized in that** the profile element (2), in its state mounted in a vehicle, is oriented with respect to a conventional vehicle co-ordinate system, in such a way that a profile transverse axis (16) running through the profile orifice extending in the longitudinal direction runs approximately perpendicularly to the force axis (K) corresponding to the vehicle longitudinal axis (X).

10. Spar element according to Claim 9, **characterized in that** the profile transverse axis (16) corresponds approximately to the vehicle transverse axis (Y), and/or **in that** the profile longitudinal axis (6) corresponds approximately to the vehicle vertical axis (Z).

## Revendications

1. Elément de poutrelle (1) pour la reprise d'une force (F) dans un véhicule, en particulier pour la reprise d'un point supérieur de ceinture intégré dans la région d'un dossier d'un siège à ceinture intégrée, constitué d'un élément profilé (2) avec une première extrémité (2a) de profilé fixée rigidement et une deuxième extrémité (2b) de profilé, libre, un point (4) d'application de la force (F) qui agit dans la direction d'un axe de force (K) qui s'étend sensiblement à la perpendiculaire de l'axe longitudinal (6) du profilé étant disposé sur la deuxième extrémité (2b) du profilé,
**caractérisé en ce que** l'élément profilé (2) est formé par un profilé creux ouvert à paroi mince de telle sorte que son point central de déplacement (T) soit décalé par rapport à son centre de gravité (S) dans le plan de la section transversale qui passe par le point (4) d'application de force, le point (4) d'application de force étant décalé par rapport au point central de déplacement (T) de telle sorte que lorsqu'une force (F) agit jusqu'à une valeur définie, on obtienne une torsion de l'élément profilé (2) autour d'un axe longitudinal jusqu'à ce que l'axe (K) de la force passe par le point central de déplacement (T).

2. Elément de poutrelle selon la revendication 1, **caractérisé en ce que** le point (4) d'application de force est décalé d'une barre au-delà du point central de déplacement (T) par rapport au centre de gravité (S) et d'autre part dans la direction dans laquelle agit la force (F).

3. Elément de poutrelle selon la revendication 1 ou 2, **caractérisé en ce que** l'élément profilé (2) présente une forme pré-tordue autour d'un axe longitudinal de telle sorte que l'application de la force élimine essentiellement la pré-torsion lorsque la valeur définie de la force est atteinte, l'axe (K) de la force passant par le point central de déplacement (T).

4. Elément de poutrelle selon l'une des revendications 1 à 3, **caractérisé en ce que** partant de la première extrémité (2a) du profilé, l'élément profilé (2) présente une section transversale dont la taille se modifie de préférence de manière constante et en particulier diminue dans le sens longitudinal jusqu'à la deuxième extrémité (2b) du profilé.

5. Elément de poutrelle selon l'une des revendications 1 à 4, **caractérisé en ce qu'**à sa deuxième extrémité (2b) de profilé, libre, l'élément profilé (2) est relié rigidement dans le sens de la longueur à un élément de fermeture (8) en forme de couvercle.

6. Elément de poutrelle selon l'une des revendications 1 à 5, **caractérisé en ce que** sur son côté longitudinal ouvert, l'élément profilé (2) présente deux ailes opposées de profilé (10, 12) qui sont reliées rigidement l'une à l'autre par une liaison transversale (14) au moins en un emplacement de l'extension longitudinale du profilé.

7. Elément de poutrelle selon la revendication 6, **caractérisé en ce que** les ailes (10, 12) du profilé sont reliées par plusieurs liaisons transversales (14) qui sont disposées à intervalles dans le sens de la longueur du profilé.

8. Elément de poutrelle selon l'une des revendications 1 à 7, **caractérisé en ce que** l'élément profilé (2) présente une section transversale à profil essentiellement en U ou en C.

9. Elément de poutrelle selon l'une des revendications 1 à 8, **caractérisé en ce que** lorsqu'il est monté dans un véhicule, l'élément profilé (2) est orienté par rapport à un système habituel de coordonnées du véhicule de telle sorte que l'axe transversal (16) du profilé qui passe par l'ouverture du profilé qui s'étend dans le sens longitudinal s'étend sensiblement à la perpendiculaire de l'axe de force (K) qui correspond à l'axe longitudinal (X) du véhicule.

10. Elément de poutrelle selon la revendication 9, **caractérisé en ce que** l'axe transversal (16) du profilé correspond sensiblement à l'axe transversal (Y) du véhicule et/ou **en ce que** l'axe longitudinal (6) du profilé correspond sensiblement à l'axe vertical (Z) du véhicule.
